(19) Europäisches Patentamt

European Patent Office

Office européen des brevets

(11) **EP 1 387 232 A1**

(12) **DEMANDE DE BREVET EUROPEEN**

(43) Date de publication:
**04.02.2004 Bulletin 2004/06**

(51) Int Cl.⁷: **G05B 23/02**, G05B 17/02,
G05B 13/02

(21) Numéro de dépôt: 02354115.4

(22) Date de dépôt: **29.07.2002**

(84) Etats contractants désignés:
**AT BE BG CH CY CZ DE DK EE ES FI FR GB GR IE IT LI LU MC NL PT SE SK TR**
Etats d'extension désignés:
**AL LT LV MK RO SI**

(71) Demandeurs:
• **Centre National De La Recherche Scientifique**
**75794 Paris Cedex 16 (FR)**

• **UNIVERSITE JOSEPH FOURIER**
**38041 Grenoble Cédex 9 (FR)**

(72) Inventeur: **Bessière, Pierre**
**38700 Corenc (FR)**

(74) Mandataire: **de Beaumont, Michel**
**Cabinet Michel de Beaumont**
**1, rue Champollion**
**38000 Grenoble (FR)**

(54) **Procédé de détermination de la valeur à donner à différents paramètres d'un système**

(57) L'invention concerne un procédé de détermination de la valeur à donner à un ensemble de paramètres spécifiques d'un système à partir des valeurs d'un ensemble de paramètres de mesure de ce système, le système étant associé à un moyen pour fournir une valeur de probabilité pour toute combinaison de valeurs des paramètres spécifiques. Le procédé comprend les étapes suivantes : relever la valeur de chaque paramètre de mesure ; construire une représentation de la distribution de probabilité de toutes les combinaisons possibles de valeurs des paramètres spécifiques correspondant aux valeurs relevées, l'ensemble des combinaisons étant divisé en plusieurs premiers ensembles de combinaisons, chaque premier ensemble pouvant se diviser en plusieurs second ensembles de façon similaire et ainsi de suite, une valeur de probabilité étant affectée à chaque ensemble ; choisir une des combinaisons de valeurs des paramètres spécifiques à partir de la représentation de la distribution de probabilité précédemment construite.

Fig 3

**Description**

La présente invention concerne un procédé de détermination de la valeur à donner à un ensemble de paramètres dits spécifiques d'un système à partir des valeurs d'un ensemble de paramètres dits de mesure du système.

Un tel procédé peut être utilisé pour commander divers systèmes tels qu'un système de reconnaissance de caractères, un système de diagnostic de panne de composants électriques, un système d'évaluation d'un coût de transport...

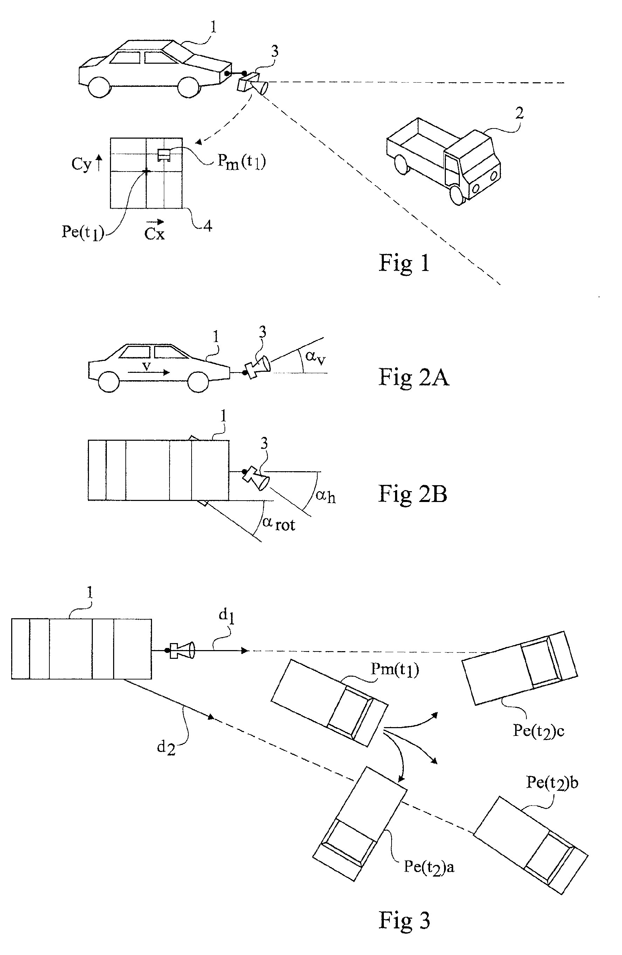

La figure 1 représente un exemple de système utilisant un tel procédé. Une voiture 1 tente de suivre un camion 2, la voiture et le camion étant des modèles réduits évoluant sur une surface plane sans obstacles. La voiture est équipée d'une caméra 3 et d'un système de commande autonome. Le système de commande a pour fonction de définir à intervalles réguliers, par exemple toutes les 100 ms, la direction et la vitesse que doit prendre la voiture 1, ainsi que l'inclinaison de la caméra de façon que le camion reste en permanence dans le champ de vision de la caméra.

A un instant donné $t_0$, le système de commande estime où sera le camion 100 ms plus tard, à un instant $t_1$. Dans le cas où le camion se déplace effectivement comme prévu, celui-ci sera à la position estimée $Pe(t_1)$, au centre de l'image 4 que la caméra va prendre à l'instant $t_1$. Toutefois de façon générale, le camion se trouvera à une position mesurée $Pm(t_1)$ distincte de $Pe(t_1)$. La position $Pm(t_1)$ est décalée en x et y par rapport à $Pe(t_1)$ selon un décalage horizontal $c_x$ et un décalage vertical $c_y$. Le décalage horizontal $c_x$ indique si le camion s'est davantage déplacé vers la gauche ou vers la droite. Le décalage vertical $c_y$ indique si le camion a accéléré ou ralenti.

La figure 2A est une vue de côté de la voiture 1 se déplaçant à la vitesse v munie de la caméra 3 et représente l'angle d'inclinaison verticale $\alpha_v$ de l'axe de la caméra. La figure 2B est une vue de dessus de la voiture 1, et représente l'angle d'inclinaison horizontale $\alpha_h$ de l'axe de la caméra, ainsi que l'angle de rotation $\alpha_{rot}$ des roues de la voiture 1.

La figure 3 représente une configuration possible de la voiture 1 et du camion 2, à l'instant $t_1$, le camion 2 étant à la position $Pm(t_1)$ de la figure 1. Il semblerait donc que le camion aille vers la droite (hypothèse a). Le camion peut aussi aller tout droit et accélérer (hypothèse b). Le camion peut aussi repartir vers la gauche (hypothèse c). On considérera par la suite que le camion n'a que ces trois possibilités et n'est susceptible que d'aller vers l'une des trois positions estimées $Pe(t_2)a$, $Pe(t_2)b$ et $Pe(t_2)c$.

Le système de commande de la voiture doit alors décider si la voiture doit prendre la direction $d_1$ permettant de rejoindre le camion $Pe(t_2)c$ ou si elle va prendre la direction $d_2$ permettant de rejoindre le camion en position $Pe(t_2)$ a ou $Pe(t_2)c$. Les trois possibilités $Pe(t_2)a$, $Pe(t_2)b$, $Pe(t_2)c$ étant a priori équiprobables, le choix de la direction $d_2$ semble être le plus judicieux car il couvre un plus grand nombre de possibilités, et on considérera par la suite que $d_2$ a été choisi.

Le système de commande doit ensuite choisir d'augmenter ou de diminuer la vitesse v de la voiture 1. L'analyse de l'image permet de penser que le camion a accéléré car il se trouve sur le haut de l'image. Une première décision pourrait être de demander une accélération de la voiture. Cependant, le système de commande a choisi d'aller dans la direction $d_2$ et il est possible que le camion tourne doucement vers la droite pour se retrouver dans la position du camion $Pe(t_2)a$. Connaissant cette probabilité, il semble alors judicieux de ne pas trop accélérer de façon à ne pas entrer en collision avec le camion.

Le système de commande définit de même les angles $\alpha_v$ et $\alpha_h$ à donner à la caméra en fonction des décisions précédemment prises et de l'estimation du déplacement futur du camion.

Le système de commande de la voiture 1 doit être capable de définir les nouvelles valeurs des paramètres v, $\alpha_{rot}$, $\alpha_v$ et $\alpha_h$, avec un calculateur et une mémoire de petites tailles et de faibles coûts. De plus, il est nécessaire que le système de commande prenne des décisions rapidement, toutes les 100 ms. Le système de commande doit aussi traiter un grand nombre de paramètres de mesure $c_x$, $c_y$ et de paramètres spécifiques ou plus précisément de commande, v, $\alpha_{rot}$, $\alpha_v$, $\alpha_h$ afin de pouvoir prendre des décisions efficaces qui permettent de suivre le camion quelle que soit sa trajectoire.

La réalisation d'un système de commande nécessite de définir au préalable les interdépendances entre les paramètres. Ainsi dans l'exemple décrit ci-dessus, le choix de l'angle d'inclinaison horizontale $\alpha_h$ et de l'angle de rotation $\alpha_{rot}$ dépend du décalage horizontal $c_x$ mesuré ; le choix de l'angle d'inclinaison verticale $\alpha_v$ et le choix de la vitesse v dépendent du décalage vertical $c_y$ mesuré. De plus, l'angle $\alpha_h$ et l'angle $\alpha_{rot}$ sont dépendants l'un de l'autre sinon le camion risque de sortir du champ de vision de la caméra, la voiture ne pouvant alors plus suivre le camion. De même, la vitesse v et l'angle $\alpha_v$ sont dépendants l'un de l'autre, l'angle $\alpha_v$ devant être adapté à la vitesse et vice versa.

Un modèle de la distribution de probabilité conjointe de l'ensemble des paramètres du système est défini à partir d'un ensemble de distributions de probabilité indépendantes définies pour chacune des interdépendances préalablement identifiées. Ainsi, la probabilité $p(v, \alpha_{rot}, \alpha_v, \alpha_h, c_x, c_y)$ pour qu'une combinaison donnée de valeurs de tous les paramètres soit possible et astucieuse, peut être définie pour l'exemple décrit ci-dessus par la formule suivante:

$$p(v, a_{rot}, \alpha_v, \alpha_h, c_x, c_y) =$$

$$p(c_x)p(c_y)p(\alpha_h/c_x)p(\alpha_v/c_y)p(\alpha_{rot}/\alpha_h)p(v/\alpha_v) \tag{1}$$

où $p(c_x)$ est la probabilité pour que le décalage horizontal $c_x$ ait une valeur donnée, $p(c_y)$ est la probabilité pour que le décalage vertical $c_y$ ait une valeur donnée, $p(\alpha_h/c_x)$ est la probabilité d'avoir un angle d'inclinaison horizontal $\alpha_h$ connaissant le décalage $c_x$, $p(\alpha_v/c_y)$ est la probabilité d'avoir un angle d'inclinaison vertical $\alpha_v$ connaissant le décalage $c_y$, $p(\alpha_{rot}/\alpha_h)$ est la probabilité d'avoir un angle de rotation $\alpha_{rot}$ connaissant l'angle $\alpha_h$, et $p(v/\alpha_v)$ est la probabilité d'avoir une vitesse v connaissant l'angle $\alpha_v$.

Les probabilités simples, non conditionnelles, telles que $p(c_x)$, peuvent être définies par une fonction analytique, par exemple $p(c_x)$=(valeur absolue de $k/c_x$) où k est une constante de normalisation. De même, les probabilités conditionnelles, telles que $p(\alpha_h/c_x)$ peuvent être définies par une famille de fonctions analytiques, pouvant être par exemple des gaussiennes centrées sur la valeur $c_x$.

Les probabilités simples, $p(c_x)$, ou conditionnelles, $p(\alpha_h/c_x)$, peuvent aussi être calculées à partir d'une base de données répertoriant le nombre de fois où un décalage horizontal $c_x$ ou un couple de valeurs $(\alpha_h, c_x)$ a été observé par exemple lors d'une phase d'apprentissage.

Le modèle de la distribution de probabilité conjointe, les fonctions analytiques et les bases de données sont mis en mémoire. Après une prise d'image à un instant $t_i$, le système de commande doit décider de la valeur à donner à chaque paramètre de commande v, $\alpha_{rot}$, $\alpha_v$, $\alpha_h$ à partir des valeurs relevées pour chaque paramètre de mesure à l'instant $t_i$, $c_{xi}$ et $c_{yi}$. Le système choisit dans un premier temps un couple de valeurs $(\alpha_{rot},v)$ puis par la suite l'autre couple de valeurs $(\alpha_v, \alpha_h)$. Seul le choix d'un couple $(\alpha_{rot},v)$ sera décrit, le choix d'un couple $(\alpha_v, \alpha_h)$ étant effectué de façon identique. La probabilité $p(\alpha_{rot},v/c_{xi},c_{yi})$ pour que le choix d'un couple $(\alpha_{rot},v)$ soit pertinent connaissant les valeurs de décalage $c_{xi}$ et $c_{yi}$ peut être calculée selon la formule suivante :

$$p(\alpha_{rot},v/c_{xi},c_{yi}) = \frac{1}{Z} \sum_{\alpha_v,\alpha_h} p(v,\alpha_{rot},\alpha_v,\alpha_h,c_{xi},c_{yi}) \tag{2}$$

où Z est une constante de normalisation.

Les systèmes de commande existants capables de choisir un couple $(\alpha_{rot},v)$ à partir de la distribution de probabilité des couples sont de deux sortes. Les premiers effectuent un choix d'un couple $(\alpha_{rot},v)$ directement à partir de la formule (2). Les seconds construisent, préalablement au choix d'un couple $(\alpha_{rot},v)$, une représentation de la distribution de probabilité des couples.

Parmi les premiers systèmes, on peut citer les méthodes dites d'optimisation qui recherchent la probabilité maximale et choisissent le couple correspondant. Or, il peut être préférable de choisir un couple ne présentant pas un maximum de probabilité. Par exemple, dans le cas où la distribution de probabilité présente plusieurs maximums pour deux couples $(\alpha_{rot,1},v_1)$ et $(\alpha_{rot,2},v_2)$, il peut être pertinent de choisir un couple ayant une vitesse intermédiaire entre $v_1$ et $v_2$ et un angle de rotation compris entre $\alpha_{rot,1}$ et $\alpha_{rot,2}$. D'autres méthodes telles que la méthode METROPOLIS (voir "Monte Carlo simulation and numerical integration" de J.Geweke de 1996), effectuent un tirage aléatoire d'un couple directement à partir de la formule (2). Ces méthodes mettent en oeuvre des algorithmes de calcul pour la plupart très complexes et utilisent des calculateurs puissants. Ces méthodes nécessitent de plus un temps de calcul important, incompatible avec certaines utilisations telles que celle décrite en figure 1.

Parmi les seconds systèmes, certaines méthodes utilisent une représentation dite tabulaire de la distribution de probabilité. Cette représentation tabulaire consiste à mémoriser pour chaque couple $(\alpha_{rot},v)$, la probabilité $p(\alpha_{rot},v/c_{xi},c_{yi})$ obtenue pour les décalages $c_{xi}$, $c_{yi}$ mesurés à l'instant $t_i$. Le choix d'un couple peut consister ensuite à prendre le couple de probabilité maximale, ou à effectuer un tirage aléatoire d'un couple à partir des données mémorisées.

Dans le cas où les paramètres étudiés sont nombreux, ou quand un paramètre peut prendre de nombreuses valeurs, le temps de calcul des probabilités de chaque couple $(\alpha_{rot},v)$ devient rapidement très grand. La taille de la mémoire utilisée pour stocker la représentation tabulaire peut elle aussi devenir rapidement prohibitive.

Une représentation de la distribution de probabilité, connue sous le nom de "mélange de gaussiennes" consiste à modéliser la distribution par un ensemble de gaussiennes, chaque gaussienne étant définie à partir d'une valeur de probabilité maximale. Au préalable, une méthode d'optimisation est utilisée pour identifier les couples $(\alpha_{rot},v)$ de probabilités maximales. Les couples sont ensuite répartis dans des groupes contenant plus ou moins de couples selon que les couples ont ou non des valeurs $\alpha_{rot}$ et v proches des maximums identifiés. Une valeur de probabilité est calculée pour chaque groupe, les valeurs de probabilité formant des gaussiennes autour des probabilités maximales. Le choix d'un couple est ensuite effectué par tirage aléatoire ou recherche du couple de probabilité maximale.

Cette méthode permet d'avoir une représentation plus ou moins précise en fonction de la place mémoire disponible. Cependant, une augmentation de la précision de la représentation nécessite de refaire la répartition des couples et le calcul des probabilités de chaque groupe. De plus, la modélisation de la distribution de probabilité par un ensemble de gaussiennes n'est pas adéquate pour tous les systèmes.

Un objet de la présente invention est de prévoir un procédé de détermination des valeurs à donner à un ou plusieurs paramètres spécifiques d'un système connaissant un ou plusieurs paramètres de mesure, dans le cas où le nombre de paramètres est très grand et/ou dans le cas où certains des paramètres peuvent prendre un grand nombre de valeurs.

Un autre objet de la présente invention est de prévoir un procédé de détermination des valeurs à donner à tous les paramètres spécifiques d'un système dans un intervalle de temps pouvant être très court.

Un autre objet de la présente invention est de prévoir un tel procédé de détermination utilisant une mémoire de taille variable et éventuellement très petite.

Un autre objet de la présente invention est de prévoir un tel procédé de détermination utilisant un dispositif de calcul simple.

Pour atteindre ces objets, la présente invention prévoit un procédé de détermination de la valeur à donner à un ensemble de paramètres spécifiques d'un système à partir des valeurs d'un ensemble de paramètres de mesure de ce système, chacun des paramètres pouvant prendre un nombre fini de valeurs, le système étant associé à un moyen pour fournir une valeur de probabilité pour toute combinaison de valeurs des paramètres spécifiques, ladite valeur de probabilité étant d'autant plus élevée que le choix de la combinaison considérée est pertinent connaissant la valeur des paramètres de mesure, le procédé comprenant les étapes suivantes :

- relever la valeur de chaque paramètre de mesure ;
- construire une représentation en forme d'arbre de la distribution de probabilité de toutes les combinaisons possibles de valeurs des paramètres spécifiques correspondant aux valeurs relevées, l'ensemble des combinaisons, constituant une première branche, étant divisé en plusieurs sous-ensembles de combinaisons, constituant des deuxièmes branches, chaque sous-ensemble regroupant des combinaisons ayant des valeurs de paramètres spécifiques proches, chaque deuxième branche pouvant se diviser en plusieurs troisièmes branches de façon similaire et ainsi de suite, une valeur de probabilité étant affectée à chaque branche, cette valeur de probabilité étant celle obtenue pour une des combinaisons de la branche considérée ou pour une des combinaisons d'une des branches dont est issue la branche considérée ;
- choisir selon un critère de sélection prédéfini une des combinaisons de valeurs des paramètres spécifiques à partir de la représentation de la distribution de probabilité en forme d'arbre précédemment construite.

Selon un mode de mise en oeuvre d'un tel procédé, les branches issues de la division d'une même branche sont au nombre de deux et contiennent le même nombre de combinaisons, la première branche se divisant en deux deuxièmes branches, chaque deuxième branche pouvant se diviser en deux troisièmes branches et ainsi de suite.

Selon un mode de mise en oeuvre d'un tel procédé, la division d'une branche en deux branches comprend les étapes suivantes :

a) choisir une combinaison différente des combinaisons ayant déjà servi à définir la valeur de probabilité des branches existantes et calculer la probabilité de cette combinaison choisie ;

b) diviser la branche dite "mère" contenant la combinaison choisie en deux branches dites "filles" ; et

dans le cas où la combinaison choisie et la combinaison "mère" ayant servi à définir la valeur de probabilité de la branche mère appartiennent à la même branche fille, attribuer aux deux branches filles la valeur de probabilité de la branche mère et diviser la branche fille contenant la combinaison choisie en reprenant le procédé à l'étape b), cette branche fille devenant la branche mère, et

dans le cas où la combinaison choisie et la combinaison mère n'appartiennent pas à la même branche fille, attribuer la valeur de probabilité de la combinaison choisie à la branche fille contenant la combinaison choisie et attribuer la valeur de probabilité de la combinaison mère à l'autre branche fille.

Selon un mode de mise en oeuvre d'un tel procédé, le critère de sélection consiste à choisir une des combinaisons présentant la probabilité maximale.

Selon un mode de mise en oeuvre d'un tel procédé, la sélection d'une combinaison consiste à mettre en oeuvre le procédé récursif comprenant les étapes suivantes :

a) choisir aléatoirement un nombre p compris entre 0 et 1 ;

b) calculer la somme des valeurs de probabilité affectées aux deux branches dites filles issues de la division de la première branche, et calculer pour chaque branche fille, une nouvelle valeur de probabilité égale au rapport entre la valeur de probabilité affectée à cette branche fille et la somme calculée ;

c) définir deux intervalles de probabilité contigus entre 0 et 1, le premier intervalle étant associé à une première branche fille, le second intervalle étant associé à la seconde branche fille, le premier intervalle allant de 0 à la valeur de probabilité de la première branche fille incluse et le second intervalle allant de cette valeur de probabilité à 1 ;

d) identifier dans quel intervalle se trouve le nombre p et sélectionner la branche fille associée à cet intervalle, et dans le cas où la branche fille sélectionnée se ramifie en d'autres branches, reprendre le procédé récursif à l'étape a) la première branche étant remplacée par la branche fille sélectionnée, sinon

e) choisir une des combinaisons de la branche fille sélectionnée.

Selon un mode de mise en oeuvre d'un tel procédé, le critère de sélection consiste à choisir une des combinaisons ayant une valeur de probabilité prédéterminée ou comprise entre deux valeurs de probabilité données.

Selon un mode de mise en oeuvre d'un tel procédé, les valeurs de probabilité affectées à chaque branche ne sont pas normalisées et peuvent être supérieures à un.

Selon un mode de mise en oeuvre du procédé décrit ci-dessus, une pondération est affectée à chaque branche, la pondération des branches des dernières ramifications étant égale au produit de la valeur de probabilité affectée à cette branche et du nombre de combinaisons de cette branche, la pondération des autres branches étant égale à la somme des pondérations des branches issues de la branche considérée et se trouvant sur le niveau de ramification suivant.

Selon un mode de mise en oeuvre du procédé susmentionné, la valeur de probabilité affectée à chaque branche peut être normalisée, la valeur de probabilité normalisée d'une branche étant obtenue en divisant la valeur de probabilité de cette branche par la pondération affectée à la première branche de l'arbre.

Selon un mode de mise en oeuvre d'un tel procédé, le choix d'une combinaison est effectué en mettant en oeuvre un procédé produisant des combinaisons ayant des valeurs de probabilité élevées.

Selon un mode de mise en oeuvre d'un tel procédé, la représentation de la distribution de probabilité de toutes les combinaisons est mémorisée et peut être affinée ultérieurement par la création de branches supplémentaires, ou peut être simplifiée par la suppression de certaines branches.

Selon un mode de mise en oeuvre d'un tel procédé, le nombre de valeurs pouvant être prises par un paramètre est artificiellement augmenté, la valeur de probabilité d'une combinaison de valeurs de paramètres de commande dont au moins une valeur d'un des paramètres correspond à une valeur ajoutée est nulle.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

la figure 1 représente une voiture tentant de suivre un camion ;
la figure 2A illustre une vue de côté de la voiture de la figure 1 ;
la figure 2B illustre une vue de dessus de la voiture de la figure 1 ;
la figure 3 illustre une configuration possible de la voiture et du camion ainsi que trois futures positions possibles du camion ;
les figures 4A à 4G illustrent des étapes d'un procédé selon la présente invention de construction d'une représentation d'une distribution de probabilité ;
la figure 5 illustre sous forme d'un arbre ramifié les étapes des figures 4B à4G ;
les figures 6A à 6D illustrent deux modes de découpages possibles de l'ensemble des couples ($\alpha_v$, $\alpha_h$) selon le procédé de la présente invention ;
la figure 7 illustre une application du procédé de la présente invention au diagnostic de panne d'un ensemble de composants électriques ; et
la figure 8 illustre une application du procédé de la présente invention à la reconnaissance de chiffres.

Le procédé de la présente invention s'applique à tout système défini selon les critères énoncés ci-après. On doit décider de la valeur à donner à n paramètres spécifiques $XS_1$ à $XS_n$ du système, connaissant les valeurs de n paramètres de mesure $XM_1$ à $XM_m$ correspondant à un état déterminé du système. Chacun des paramètres peut prendre un nombre fini de valeurs. Les valeurs des paramètres spécifiques forment une suite continue d'entiers. Les paramètres de mesure peuvent être des variables symboliques, les valeurs possibles pouvant être jaune, bleu, vert et rouge. Un modèle de la distribution de probabilité conjointe de l'ensemble des paramètres du système est connu et on peut calculer la probabilité $p(XS_1,... ,XS_n,XM,....XM_m)$ pour qu'une combinaison donnée de tous les paramètres $(XS_1,...,XS_n,XM_1,...,XM_m)$ soit pertinente. Les fonctions analytiques et les bases de données utilisées par le modèle de la distribution de probabilité du système sont connues.

A tout instant, il est possible de réaliser à partir du modèle du système, une inférence consistant à définir la distribution de probabilité des combinaisons de valeurs de tout ou partie des paramètres spécifiques, par exemple $(XS_1, XS_2, XS_n)$, connaissant les valeurs de tout ou partie des paramètres de mesure, par exemple $(XM_1, XM_3)$. La probabilité $p(XS_1, XS_2, XS_n / XM_1, XM_3)$ pour que le choix d'une combinaison $(XS_1, XS_2, XS_n)$ soit pertinent connaissant les valeurs des paramètres de mesure $(XM_1, XM_3)$ est définie par :

$$p(XS_1, XS_2, XS_n / XM_1, XM_3) =$$

$$\frac{1}{Z} \sum_{\substack{XS_3, ..., XS_{n-1}, \\ XM_2, XM_4, ... XM_m}} p(XS_1, ..., XS_n, XM_1, ..., XM_m) \qquad (3)$$

où Z est une constante de normalisation.

Après un relevé des valeurs des paramètres de mesure considérés, la présente invention prévoit un procédé de construction d'une représentation de la distribution de probabilité des combinaisons de valeurs des k paramètres spécifiques choisis, obtenue pour les valeurs relevées. Une combinaison de valeurs des k paramètres choisis sera ci-après appelée "une combinaison". L'ensemble des combinaisons peut être représenté par un ensemble de points définis dans un espace E à k dimensions. La distribution de probabilité est alors représentée dans un espace à k+1 dimensions.

Le procédé de construction de la présente invention vise à diviser l'espace E en plusieurs ensembles de points et à affecter une valeur de probabilité identique à tous les points d'un même ensemble pour obtenir une représentation de la distribution de probabilité des combinaisons.

Une fois la représentation de la distribution de probabilité des combinaisons obtenue par le procédé de la présente invention, le choix d'une combinaison est réalisé selon un de plusieurs critères de sélection.

Les applications du procédé de la présente invention peuvent être très diverses comme il apparaîtra à la lecture des exemples mentionnés.

Dans une première partie, on décrira un procédé de construction d'une représentation de la distribution de probabilité des combinaisons.

Dans une deuxième partie, on décrira différents critères de sélection.

Dans une troisième partie, on décrira des exemples d'application du procédé de la présente invention.

1. PROCEDE DE CONSTRUCTION

1.1. Principe général

Le procédé de construction d'une représentation de la distribution de probabilité des combinaisons consiste à choisir successivement différentes combinaisons parmi l'ensemble des combinaisons possibles et à calculer leurs valeurs de probabilité respectives. Après chaque choix d'une combinaison, l'ensemble de points de l'espace E contenant la combinaison choisie est divisé en plusieurs ensembles de points. L'ensemble de points contenant la combinaison choisie prend la valeur de probabilité de cette combinaison. Les autres ensembles de points gardent la valeur de probabilité qu'ils avaient avant la division.

Initialement, l'espace E n'est pas divisé et tous les points de l'espace E prennent la valeur de probabilité p1 de la première combinaison choisie $C_1$.

Le choix d'une deuxième combinaison $C_2$, différente de la première combinaison choisie $C_1$, entraîne une division de l'espace E en plusieurs ensembles de points, l'ensemble de points contenant la deuxième combinaison choisie $C_2$ prenant la valeur de probabilité $p_2$ de la deuxième combinaison choisie $C_2$, les autres ensembles de points prenant la valeur de probabilité $p_1$ de la première combinaison choisie $C_1$.

Le choix d'une troisième combinaison $C_3$, différente des première et deuxième combinaisons choisies $C_1$ et $C_2$, entraîne la division de l'ensemble de points "père" contenant la troisième combinaison choisie $C_3$ en plusieurs ensembles de points "fils", l'ensemble de points "fils" contenant la troisième combinaison choisie $C_3$ prenant la valeur de probabilité $p_3$ de la troisième combinaison choisie, les autres ensembles de points "fils" prenant la valeur de probabilité de l'ensemble de points "père", $p_1$ ou $p_2$.

Le choix d'une éventuelle quatrième combinaison $C_4$, différente de celles précédemment choisies, entraînerait à nouveau la division de l'ensemble de points "père" contenant la quatrième combinaison choisie $C_4$ en plusieurs ensembles de points "fils", l'ensemble de points "fils" contenant la quatrième combinaison choisie $C_4$ prendrait alors la valeur de probabilité $p_4$ de la quatrième combinaison choisie $C_4$, et les autres ensembles de points "fils" prendrait la valeur de probabilité de l'ensemble de points "père" $p_1$, $p_2$ ou $p_3$.

Ce procédé de construction peut être répété autant de fois que possible en fonction du temps dont on dispose. La représentation de la distribution de probabilité sera d'autant plus précise que le nombre de combinaisons choisies est grand. Contrairement à la création d'une représentation selon la méthode de "mélange de gaussiennes", le procédé de construction de la présente invention peut être exécuté pendant une durée variable, le choix de la durée d'exécution pouvant être adapté à chaque système.

Les combinaisons successivement choisies peuvent être obtenues selon un procédé pseudo-aléatoire produisant des combinaisons réparties uniformément sur l'espace E ou selon un procédé optimisé produisant des combinaisons ayant des valeurs de probabilité élevées.

Selon un mode de mise en oeuvre du procédé de la présente invention, chaque ensemble de points "fils", issus de la division d'un ensemble de points "père", comprend un nombre identique de combinaisons.

### 1.2. Arbre de construction

La présente invention prévoit de garder une trace de la construction de la distribution de probabilité par l'intermédiaire d'un arbre de construction.

La première branche de l'arbre de construction représente l'espace E et prend la valeur de probabilité $p_1$. La première branche se ramifie en deuxièmes branches représentant chacune un des ensembles de points issus de la division de l'espace E. Chaque deuxième branche prend la valeur de probabilité des points de la deuxième branche considérée.

La deuxième branche associée à l'ensemble de points "père" contenant la troisième combinaison choisie $C_3$ se ramifie en troisièmes branches représentant chacune un des ensembles de points "fils". Chaque troisième branche prend la valeur de probabilité des points de la troisième branche considérée.

De façon générale, chaque deuxième branche est susceptible de se ramifier en plusieurs troisièmes branches en fonction des nouvelles combinaisons choisies. Chaque troisième branche peut se ramifier en plusieurs quatrièmes branches et ainsi de suite.

L'arbre de construction est mémorisé au fur et à mesure de sa construction. Les branches terminales de l'arbre donnent le découpage final de l'ensemble des combinaisons. La représentation finale de la distribution de probabilité sera par la suite utilisée pour choisir une des combinaisons comme cela sera décrit dans la deuxième partie. On pourra prévoir de construire une représentation de la distribution de probabilité plus ou moins précise en fonction de la mémoire disponible.

La création d'un arbre de construction présente plusieurs intérêts, comme cela sera précisé ci-après, notamment pour l'obtention de valeurs de probabilité normalisées et pour la sélection d'une combinaison par tirage aléatoire selon un procédé de tirage aléatoire de la présente invention.

### 1.3. Illustration pour le système voiture/camion

#### 1.3.1 Choix d'une vitesse

La construction d'une représentation de la distribution de probabilité des combinaisons selon le procédé de la présente invention est illustrée ci-après pour le système voiture/camion précédemment décrit.

On considère dans un premier temps, le cas où le système de commande de la voiture décide des valeurs à donner aux paramètres de commande ($\alpha_{rot}$, v, $\alpha_v$, $\alpha_h$) les unes après les autres. Dans le cas d'un choix d'une vitesse, la probabilité p(v) pour que le choix d'une vitesse v à un instant $t_i$ soit pertinent connaissant les valeurs de décalage $c_{xi}$ et $c_{yi}$ relevées à l'instant $t_i$, peut être calculée comme suit :

$$p(v/c_{xi},c_{yi}) = \frac{1}{Z} \sum_{\alpha_v,\alpha_h,\alpha_{rot}} p(v,\alpha_{rot},\alpha_v,\alpha_h,c_{xi},c_{yi})$$

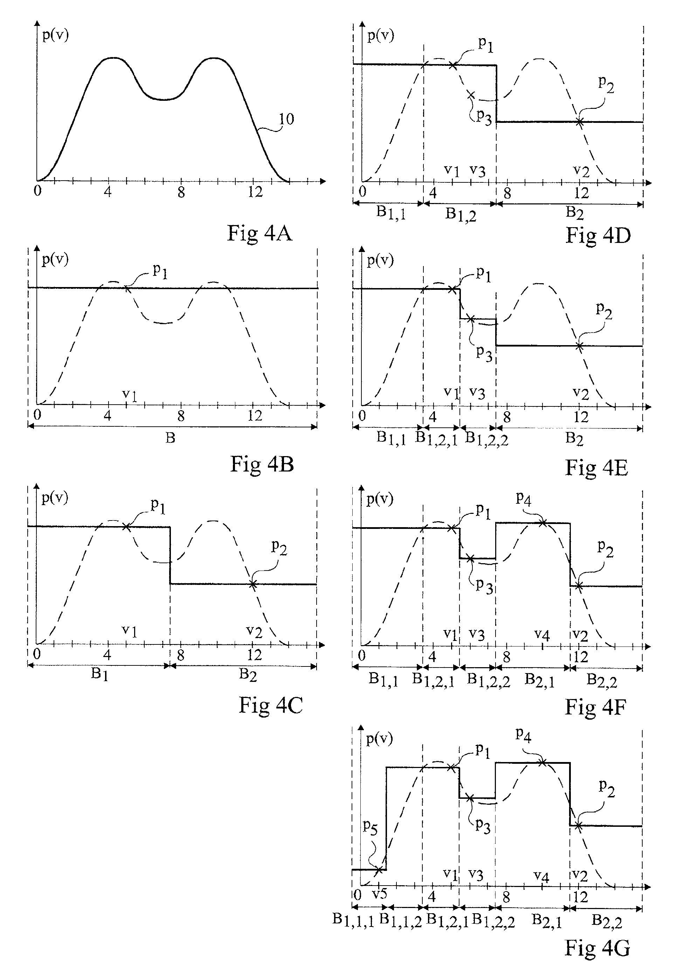

La figure 4A représente une distribution de probabilité 10 des valeurs de vitesse obtenue pour les valeurs de décalage $C_{x0}$ et $C_{yo}$ relevées à l'instant $t_0$. C'est cette distribution dont on cherche à obtenir une approximation, de façon simple, rapide et en minimisant les moyens de calcul et de mémorisation utilisés. La vitesse v peut prendre une valeur entière comprise entre 0 et 15 km/heure inclus. La vitesse est représentée en abscisses, la probabilité p(v) est représentée en ordonnées. Dans cet exemple, la distribution de probabilité 10 des valeurs de vitesse est une fonction continue qui vaut 0 quand la vitesse est nulle ou supérieure à 14 et qui présente deux maximums pour les vitesses v égales à 4 km/h et 10 km/h.

L'ensemble des figures 4B à 4G illustre la construction d'une représentation de la distribution de probabilité de la figure 4A. Les ensembles de valeurs de vitesse, ou branches, sont représentés par une flèche à double sens positionnée sous les valeurs de vitesse faisant partie de la branche. Un trait horizontal coupant la distribution de probabilité 10, et placé au dessus d'une flèche à double sens, représente la valeur de probabilité associée aux valeurs de vitesse de la branche représentée par la flèche à double sens.

La figure 4B illustre une première étape de la construction liée au choix d'une première valeur de vitesse $v_1$ égale à 4 km/h de probabilité $p_1$, l'ensemble des valeurs de vitesse, formant une première branche B, prend la valeur de probabilité $p_1$.

La figure 4C illustre une deuxième étape de la construction liée au choix d'une deuxième valeur de vitesse $v_2$ égale à 12 km/h, de probabilité $p_2$. L'ensemble des valeurs de vitesse est divisé en deux ensembles de valeurs de vitesse formant chacun deux deuxièmes branches $B_1$ et $B_2$. La branche $B_1$ regroupe les valeurs de vitesse les plus faibles allant de 0 à 7 km/h. La branche $B_2$ regroupe les valeurs de vitesse les plus élevées allant de 8 à 15 km/h. Les deux branches $B_1$ et $B_2$ regroupent un même nombre de valeurs de vitesse. La branche $B_2$ contient la deuxième valeur de vitesse choisie $v_2$, elle prend donc la valeur de probabilité $p_2$. La branche $B_1$ garde la valeur de probabilité $p_1$.

Selon un premier aspect du mode de mise en oeuvre du procédé de la présente invention choisi pour cet exemple, la ramification d'une branche conduit à la création de deux branches comprenant un même nombre de valeurs de vitesse, l'une des branches comprenant les valeurs de vitesse les plus faibles, l'autre branche comprenant les valeurs de vitesse les plus élevées.

Les figures 4D et 4E illustrent deux phases d'une troisième étape de la construction liée au choix d'une troisième valeur de vitesse $v_3$ égale à 6 km/h de valeur de probabilité $p_3$. Dans une première phase, la branche $B_1$ contenant la troisième valeur de vitesse choisie $v_3$ se ramifie en deux branches $B_{1,1}$ et $B_{1,2}$ comme cela apparaît en figure 4D. La branche $B_{1,1}$ regroupe les valeurs de vitesse allant de 0 à 3 km/h, la branche $B_{1,2}$ regroupe les valeurs de vitesse allant de 4 à 7 km/h. Les première et troisième valeurs de vitesse choisies $v_1$ et $v_3$ appartiennent à la même branche $B_{1,2}$. Dans ce cas, les branches $B_{1,1}$ et $B_{1,2}$ gardent la valeur de probabilité $p_1$. Le procédé de ramification va se poursuivre (figure 4E) jusqu'à ce qu'une des branches contienne uniquement la troisième valeur de vitesse $v_3$.

Selon un second aspect du mode de mise en oeuvre du procédé de la présente invention choisi pour cet exemple, la ramification d'une branche "mère" contenant la dernière valeur de vitesse choisie se poursuit jusqu'à ce qu'une branche "fille" contienne uniquement la nouvelle valeur de vitesse choisie et aucune autre valeur de vitesse préalablement choisie. Les branches "filles" intermédiaires prennent la valeur de probabilité de la branche "mère".

La figure 4E illustre la seconde phase de la troisième étape. La branche $B_{1,2}$ contenant la troisième valeur de vitesse choisie $v_3$ se ramifie en deux branches $B_{1,2,1}$ et $B_{1,2,2}$ comprenant respectivement les valeurs de vitesse 4, 5 et 6, 7 km/h. La branche $B_{1,2,2}$ contient uniquement la troisième valeur de vitesse choisie $v_3$ et aucune autre valeur de vitesse choisie. On affecte donc la valeur de probabilité $p_3$ à la branche $B_{1,2,2}$. La branche $B_{1,2,1}$ garde la valeur de probabilité $p_1$ de la branche $B_{1,2}$ dont elle est issue.

La figure 4F illustre une quatrième étape de la construction liée au choix d'une quatrième valeur de vitesse $v_4$ égale à 10 km/h de valeur de probabilité $p_4$. La branche $B_2$ contenant la quatrième valeur de vitesse choisie $v_4$ se ramifie en deux branches $B_{2,1}$ et $B_{2,2}$, les branches regroupant respectivement les valeurs de vitesse 8 à 11 et 12 à 15 km/h. La quatrième valeur de vitesse $v_4$ appartient à la branche $B_{2,1}$ et aucune autre valeur de vitesse choisie n'appartient à cette branche. On affecte alors la valeur de probabilité $p_4$ à la branche $B_{2,1}$. La branche $B_{2,2}$ garde la valeur de probabilité $p_2$.

La figure 4G illustre une cinquième étape de la construction liée au choix d'une cinquième valeur de vitesse $v_5$ égale à 1 km/h, de probabilité $p_1$. La branche $B_{1,1}$ contenant la cinquième valeur de vitesse choisie $v_5$ se ramifie en deux branches $B_{1,1,1}$ et $B_{1,1,2}$, les branches regroupant respectivement les valeurs de vitesse 0, 1 et 2, 3 km/h. La cinquième valeur de vitesse choisie $v_5$ n'appartient à la branche $B_{1,1,1}$ et aucune autre valeur de vitesse choisie appartient à cette branche. On affecte alors la valeur de probabilité $p_5$ à la branche $B_{1,1,1}$. La branche $B_{1,1,2}$ garde la valeur de probabilité $p_1$. On note qu'à ce dernier stade, on a obtenu sous forme de segments une bonne approximation de la distribution de probabilité 10 de la figure 4A.

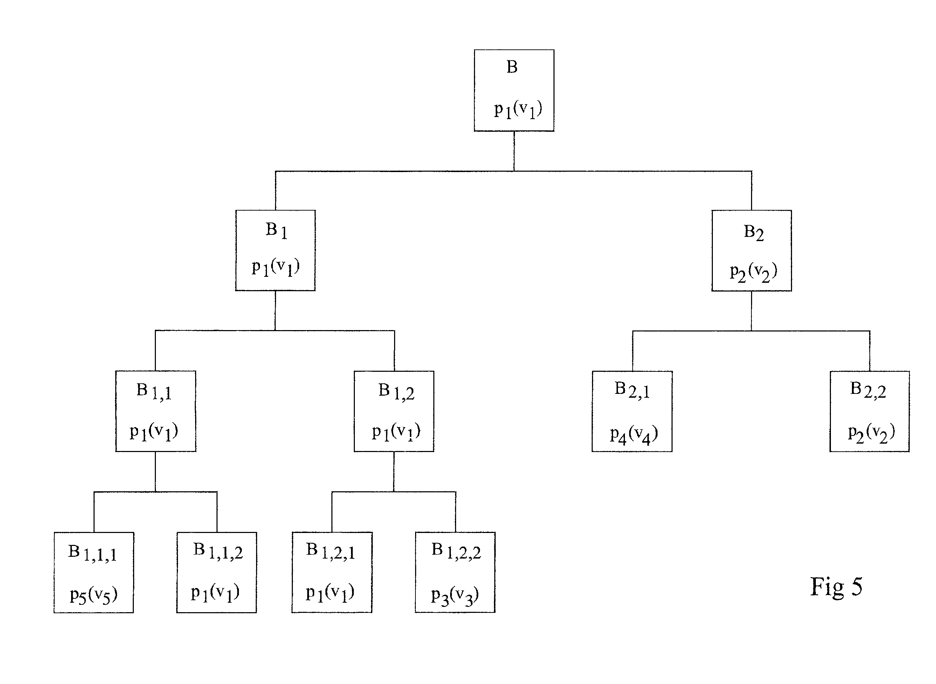

La figure 5 représente l'arbre de construction de la représentation de la distribution de probabilité des valeurs de vitesse obtenue selon les cinq étapes décrites en relation aux figures 4A à 4G. La branche B de valeur de probabilité $p_1$ se ramifie en deux branches $B_1$ et $B_2$ de valeur de probabilité respectives $p_1$ et $p_2$. La branche $B_2$ se ramifie en deux branches $B_{2,1}$ et $B_{2,2}$ de valeurs de probabilité respectives $p_1$ et $p_2$. La branche $B_1$ se ramifie en deux branches $B_{1,1}$ et $B_{1,2}$ de valeurs de probabilité $p_1$. La branche $B_{1,1}$ se ramifie en deux branches $B_{1,1,1}$ et $B_{1,1,2}$ de valeurs de probabilité respectives $p_5$ et $p_1$. La branche $B_{1,2}$ se ramifie en deux branches $B_{1,2,1}$ et $B_{1,2,2}$ de valeurs de probabilité

respectives $p_1$ et $p_3$. Le découpage final de l'ensemble des valeurs de vitesse est donné par les branches terminales de l'arbre de construction.

1.3.2. <u>Choix des angles $\alpha_h$, $\alpha_v$)</u>

La construction d'une représentation de la distribution de probabilité des combinaisons selon le procédé de la présente invention est illustrée ci-après dans le cas où le système de commande de la voiture décide des valeurs à donner à deux paramètres de commande.

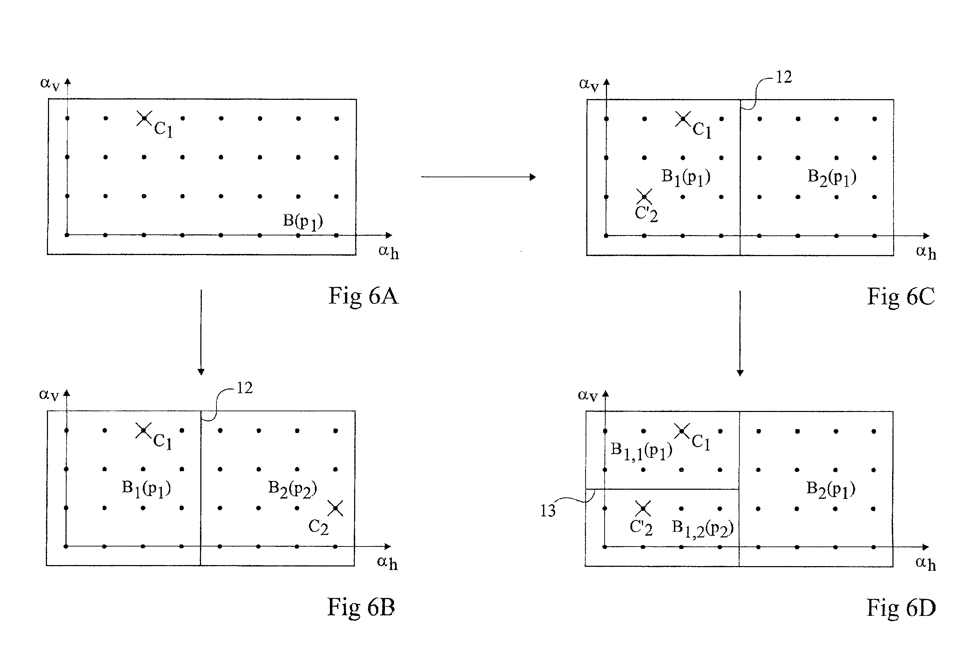

Les figures 6A à 6D représente l'espace E à deux dimensions de l'ensemble des couples de valeurs d'angles d'inclinaison horizontale et verticale ($\alpha_h$, $\alpha_v$). Un couple de valeurs d'angles d'inclinaison horizontale et verticale ($\alpha_h$, $\alpha_v$) sera ci-après appelé un couple. L'angle d'inclinaison horizontale $\alpha_h$ est représenté en abscisses. L'angle d'inclinaison verticale $\alpha_v$ est représenté en ordonnées.

La probabilité $p(\alpha_h, \alpha_v/c_{xi}, c_{yi})$ pour que le choix d'un couple ($\alpha_h$, $\alpha_v$) soit pertinent connaissant les valeurs de décalage $c_{xi}$ et $c_{yi}$ peut être calculée selon la formule suivante:

$$p(\alpha_h, \alpha_v/c_{xi}, c_{yi}) = \frac{1}{Z} \sum_{\alpha_{rot}, v} p(v, \alpha_{rot}, \alpha_v, \alpha_h, c_{xi}, c_{yi}) \qquad (4)$$

où Z est une constante de normalisation et $p(v, \alpha_{rot}, \alpha_v, \alpha_h, c_x, c_y)$ est calculée selon la formule (1).

Le mode de mise en oeuvre du procédé de la présente invention pour cet exemple reprend les premier et second aspects décrits ci-dessus. Les branches issues d'une ramification sont au nombre de deux et contiennent le même nombre de couples. La ramification d'une branche se poursuit jusqu'à ce que le dernier couple choisi soit le seul couple choisi d'une des branches.

L'angle d'inclinaison horizontale $\alpha_h$ peut prendre six valeurs comprises entre 0° et 5°, l'angle d'inclinaison verticale $\alpha_v$ peut prendre quatre valeurs comprises entre 0° et 3°.

Pour simplifier le traitement informatique, le nombre de valeurs qu'un paramètre peut prendre, si ce n'est pas une puissance de deux, est augmenté à la puissance de deux immédiatement supérieure. La probabilité des couples dont un des paramètres correspond à une valeur ajoutée (non prévue initialement) est nulle.

Dans cet exemple, l'angle d'inclinaison horizontale $\alpha_h$ peut prendre initialement six valeurs. On porte donc artificiellement le nombre de valeurs à 8 ($2^3$), les valeurs possibles sont désormais 0° à 7°. Aucune augmentation du nombre de valeurs n'est effectuée pour l'angle d'inclinaison verticale $\alpha_v$ pour lequel 4 ($2^2$) valeurs sont possibles.

La figure 6A représente l'ensemble des couples ($\alpha_h$, $\alpha_v$) constituant la première branche B. De même que précédemment, on choisit un premier couple $C_1$ ($\alpha_{h1}$=2, $\alpha_{v1}$=3) et on affecte à l'ensemble des couples de la branche B la valeur de probabilité $p_1$ calculée pour le premier couple $C_1$.

La figure 6B illustre une ramification possible de la branche B après le choix d'un second couple $C_2$ ($\alpha_{h2}$=7, $\alpha_{v2}$=4) de probabilité $p_2$. La branche B se ramifie en deux branches $B_1$ et $B_2$ selon une limite verticale 12 passant entre les valeurs 3° et 4° d'angle d'inclinaison horizontale. La branche $B_1$ regroupe les couples ayant un angle d'inclinaison horizontale strictement inférieur à 4 ($2^2$). La branche $B_2$ regroupe les couples ayant un angle d'inclinaison horizontale supérieur à 4 ($2^2$).

Selon un aspect du mode de mise en oeuvre du procédé de la présente invention pour cet exemple, la ramification d'une branche "mère" conduit à la création de deux branches selon une limite verticale. Dans le cas où il est impossible de définir une limite verticale, c'est-à-dire quand les couples de la branche "mère" ont tous la même valeur d'angle d'inclinaison horizontale $\alpha_h$, la division se fait selon une limite horizontale passant entre deux valeurs d'angle d'inclinaison verticale $\alpha_v$.

Les figures 6C et 6D illustrent une autre ramification possible de la branche B, le second couple choisi $C_{2'}$ ($\alpha_{v2'}$=1, $\alpha_{h2'}$=1) étant différent de $C_2$. La figure 6C illustre une première division de la branche B selon la même limite verticale 12 que celle précédemment définie. Le premier couple $C_1$ et le second couple $C_{2'}$ choisis appartiennent tous deux à la branche $B_1$. Les branches $B_1$ et $B_2$ prennent la valeur de probabilité $p_1$ du premier couple $C_1$ et on procède à une nouvelle ramification de la branche $B_1$ contenant le couple $C_{2'}$, jusqu'à ce que les deux couples choisis $C_1$ et $C_{2'}$ soient dans des branches distinctes.

La figure 6D illustre la ramification de la branche $B_1$ selon une limite horizontale 13 passant entre les valeurs 1° et 2° d'angle d'inclinaison verticale $\alpha_v$. La branche B1,1 regroupe les couples ayant une valeur d'angle d'inclinaison verticale supérieure ou égale à 2. La branche $B_{1,2}$ regroupe quand à elle les couples ayant une valeur d'angle d'inclinaison verticale strictement inférieure à 2. La branche $B_{1,2}$ prend la valeur de probabilité $p_2$ du second couple $C_{2'}$, et la branche $B_{2,2}$ la valeur de probabilité $p_1$.

Selon un autre aspect du mode de mise en oeuvre du procédé de la présente invention pour cet exemple, les ramifications successives d'une branche "mère" s'effectuent successivement selon une limite verticale et une limite horizontale jusqu'à ce que la nouvelle combinaison choisie soit la seule des combinaisons choisies à appartenir à une branche "fille" donnée.

### 1.4. Valeurs de probabilité normalisées

Les valeurs de probabilité, par exemple $p(XS_1, XS_2, XS_n)$, obtenues à partir de la formule (3) sont en fait définies à une constante près, la constante de normalisation Z. Cette constante peut être calculée seulement quand les valeurs de probabilité de toutes les combinaisons $(XS_1, XS_2, XS_n)$ sont connues et ont été calculées sans tenir compte de Z (Z prise égale à 1). La constante de normalisation Z est alors égale à la somme de toutes les valeurs de probabilité.

En pratique, on ne calcule que très peu de valeurs de probabilité lors de la construction de la représentation de la distribution de probabilité. Les valeurs de probabilité calculées pour les combinaisons choisies ne sont pas normalisées.

La présente invention prévoit de définir une constante de normalisation intermédiaire $Z_i$ qui soit une estimation de la constante de normalisation Z. La constante de normalisation $Z_i$ est calculée durant la construction de la représentation de la distribution de probabilité. Elle est égale à la somme des valeurs de probabilité de toutes les combinaisons, la valeur de probabilité d'une combinaison étant celle affectée à la branche contenant la combinaison considérée.

Afin de calculer aisément la constante de normalisation intermédiaire $Z_i$, la présente invention prévoit d'affecter à chaque branche une pondération. La pondération des branches des dernières ramifications est égale au produit de la valeur de probabilité affectée à la branche considérée et du nombre de combinaisons de cette branche. La pondération d'une des autres branches est égale à la somme des pondérations des branches issues de la branche considérée et se trouvant sur le niveau de ramification suivant. La pondération de la première branche est alors égale à la constante de normalisation intermédiaire $Z_i$.

Les pondérations sont réactualisées lors d'une ramification d'une des branches terminales de l'arbre de construction. Les pondérations des branches se trouvant entre la première branche et la branche terminale se ramifiant doivent être recalculées.

Ainsi, pour l'exemple de construction de la représentation de la distribution de probabilité des vitesses représentée en figures 4B à 4G, la pondération de la branche $B_1$ à l'issue de la première étape, figure 4B, vaut $16*p_1$. A l'issue de la deuxième étape, figure 4C, les pondérations des nouvelles branches $B_1$ et $B_2$ valent respectivement $8*p_1$ et $8*p_2$, la pondération de la branche B est réactualisée et vaut désormais $8*p_1+8*p_2$. A l'issue de la troisième étape, figure 4D, les pondérations des branches $B_{1,1}$ et $B_{1,2}$ valent toutes deux $4*p_1$, et la pondération des branches $B_1$ et B reste inchangée (respectivement $4*p_1+4*p_1=8*p_1$ et $(4*p_1+4*p_1)+8*p_1=16*p_1$) car les valeurs de probabilité affectées aux différentes vitesses n'ont pas changé, seule la division des valeurs de vitesse a changé. A l'issue de la quatrième étape, figure 4E, les pondérations des branches $B_{1,2,1}$ et $B_{1,2,2}$ valent respectivement $2*p_1$ et $2*p_3$, la pondération de la branche $B_{1,2}$ vaut désormais $2*p_1+2*p_3$, la pondération de la branche $B_1$ vaut $4*p_1+(2*p_1+2*p_3)$ et la pondération de la branche B vaut $(4*p_1+(2*p_1+2*p_3))+8*p_2$.

Un avantage du procédé de la présente invention est qu'il permet de connaître rapidement la valeur de probabilité normalisée d'une vitesse car il n'est pas nécessaire de calculer toutes les valeurs de probabilité.

### 1.5. Avantages

Le procédé de la présente invention permet de représenter des distributions de probabilité très diverses contrairement à la méthode de "mélange de gaussiennes".

Le procédé de la présente invention permet d'obtenir une représentation plus ou moins détaillée en fonction de la mémoire disponible et du temps de calcul imparti.

De plus, la mise en oeuvre d'un procédé optimisé pour le choix des combinaisons permet d'obtenir en très peu de temps, une représentation occupant peu de mémoire et présentant une précision suffisante pour les zones de l'espace E où les combinaisons présentent des valeurs de probabilité élevées. Le procédé de la présente invention est ainsi "multi résolution" dans le sens où le découpage de l'espace E peut être très fin pour certaines parties et grossier pour d'autres.

Cette caractéristique "multi résolution" du procédé de la présente invention permet, contrairement aux représentations existantes, de construire en relativement peu de temps et en utilisant des mémoires de tailles raisonnables, des représentations de distributions de probabilité d'un grand nombre de paramètres de commande ou de paramètres pouvant prendre un grand nombre de valeurs.

## 2. SELECTION

Des modes de sélection connus d'une des combinaisons à partir d'une représentation de la distribution de probabilité des combinaisons consistent à choisir une des combinaisons présentant la probabilité maximale ou de choisir une combinaison par tirage aléatoire dont le principe sera rappelé ci-après. On pourra néanmoins définir d'autres critères de sélection tels que le choix d'une des combinaisons ayant une valeur de probabilité prédéterminée ou le choix d'une des combinaisons ayant une valeur de probabilité comprise entre deux valeurs de probabilité données.

### 2.1. Choix d'une combinaison de probabilité maximale

Selon un mode de mise en oeuvre du procédé de la présente invention, un registre mémoire est utilisé pour stocker une indication de la ou les branches présentant la valeur de probabilité maximale. Le registre mémorise initialement la première branche de l'arbre de construction, puis il est mis à jour durant la construction de la représentation de la distribution de probabilité. A chaque ramification d'une branche, on regarde si la valeur de probabilité de la dernière combinaison choisie est supérieure à la valeur de probabilité de la branche mémorisée par le registre et si c'est le cas, le registre est remis à jour et mémorise la nouvelle branche contenant la dernière combinaison choisie.
Dans le cas où la branche de probabilité maximale se ramifie et donne une ou plusieurs branches "filles" de même probabilité, le registre est réactualisé et mémorise toutes les branches "filles".
Le choix d'une combinaison consiste ensuite à identifier la branche mémorisée par le registre contenant le plus grand nombre de combinaisons et à choisir ensuite une des combinaisons de cette branche.

### 2.2 Sélection par tirage aléatoire

Un tirage aléatoire consiste à choisir une des combinaisons possibles d'une façon telle qu'une combinaison présentant une probabilité élevée a de fortes chances d'être choisie et une combinaison présentant une probabilité faible a peu de chance d'être choisie. A la suite d'un grand nombre de tirages aléatoires, la distribution de probabilité des combinaisons "tirées" est identique à la distribution de probabilité des combinaisons initiale sur laquelle s'appuie le procédé de tirage aléatoire.
Selon un mode de mise en oeuvre du procédé de la présente invention, le tirage aléatoire d'une combinaison est effectué selon un procédé de sélection récursif utilisant l'arbre de construction de la représentation de la distribution de probabilité.
En partant de la première branche, on choisit une deuxième branche, puis une troisième branche et ainsi de suite jusqu'à élire une branche terminale de l'arbre de construction. Pour ce faire, on choisit une deuxième branche en faisant un tirage aléatoire parmi les deuxièmes branches. Les deuxièmes branches présentent les probabilités les plus élevées ont plus de chance d'être choisies et inversement. On choisit de même une des troisième branches issues de la deuxième branche choisie en faisant un tirage aléatoire entre ces troisièmes branches et ainsi de suite.
Dans le cas où chaque branche se ramifie en deux branches, le procédé de la présente invention comprend plusieurs étapes décrites ci-après.
Dans une première étape du procédé, on choisit aléatoirement un nombre p compris entre 0 et 1 inclus.
Dans une deuxième étape, on calcule la somme S des valeurs de probabilité affectées aux 2 branches "filles" issues de la ramification de la première branche. Puis on calcule pour chaque branche "fille", une nouvelle valeur de probabilité égale au rapport entre la valeur de probabilité affectée à la branche considérée et la somme S calculée.
Dans une troisième étape, on définit deux intervalles de probabilité contigus entre 0 et 1, le premier intervalle étant associé à une première branche fille, le second intervalle étant associé à la seconde branche fille. Le premier intervalle va de 0 à la valeur de probabilité de la première branche fille incluse et le second intervalle va de cette valeur de probabilité à 1.
Dans une quatrième étape, on identifie dans quel intervalle se trouve le nombre p et on sélectionne la branche "fille" associée à cet intervalle.
Dans le cas où la branche "fille" sélectionnée se ramifie en d'autres branches, on reprend le procédé récursif à la première étape, la première branche étant remplacée par la branche "fille" sélectionnée. On pourra éventuellement reprendre le premier nombre p choisi.
Dans le cas où la branche "fille" sélectionnée ne se ramifie pas en d'autres branches, le procédé récursif s'arrête et on choisit une des combinaisons de la branche "fille" sélectionnée.
Le procédé de sélection récursif susmentionné est utilisé dans l'exemple du système voiture/camion pour choisir une vitesse ou un couple d'angles d'inclinaison ($\alpha_v$, $\alpha_h$).
Un avantage du procédé de la présente invention est que le procédé de tirage aléatoire est simple et facile à mettre en oeuvre.

2.3 <u>Mémorisation de l'arbre</u>

Une fois la décision prise, l'arbre de construction peut être effacé de la mémoire. Néanmoins, on pourra prévoir, pour des systèmes tels que la voiture et le camion, de conserver dans une mémoire "cache" les arbres de construction obtenus successivement après différents relevés des paramètres de mesure. On pourra mémoriser les arbres de construction le plus souvent utilisés.

Dans le cas où une distribution de probabilité est souvent utilisée, on peut affiner sa représentation en poursuivant la ramification de l'arbre de construction de cette représentation. Dans l'exemple voiture/camion, on pourra continuer la ramification de l'arbre pendant le temps imparti entre le relevé des valeurs de $c_x$ et $c_y$ et le moment où il faut choisir les valeurs de $\alpha_{rot}$, $v$, $\alpha_v$, et $\alpha_h$.

De même, dans le cas où une distribution de probabilité a été à un moment donné beaucoup utilisée puis un peu moins par la suite, on peut diminuer la précision de la représentation de la distribution de probabilité en supprimant plus ou moins de branches terminales de l'arbre de construction.

Dans le cas où l'on choisit de calculer une pondération pour chaque branche afin de connaître la constante de normalisation intermédiaire telle que définie précédemment, on réactualisera les valeurs des pondérations des branches se trouvant entre la première branche et la ou les branches que l'on supprime.

Un avantage du procédé de la présente invention est qu'il permet d'affiner ou de simplifier une représentation d'une distribution de probabilité. Ceci permet de mettre en oeuvre des stratégies de mémorisation de représentations de différentes distributions de probabilité afin d'améliorer globalement les choix de combinaisons successifs.

3. <u>EXEMPLES D'APPLICATION</u>

3.1. <u>Diagnostic d'une panne</u>

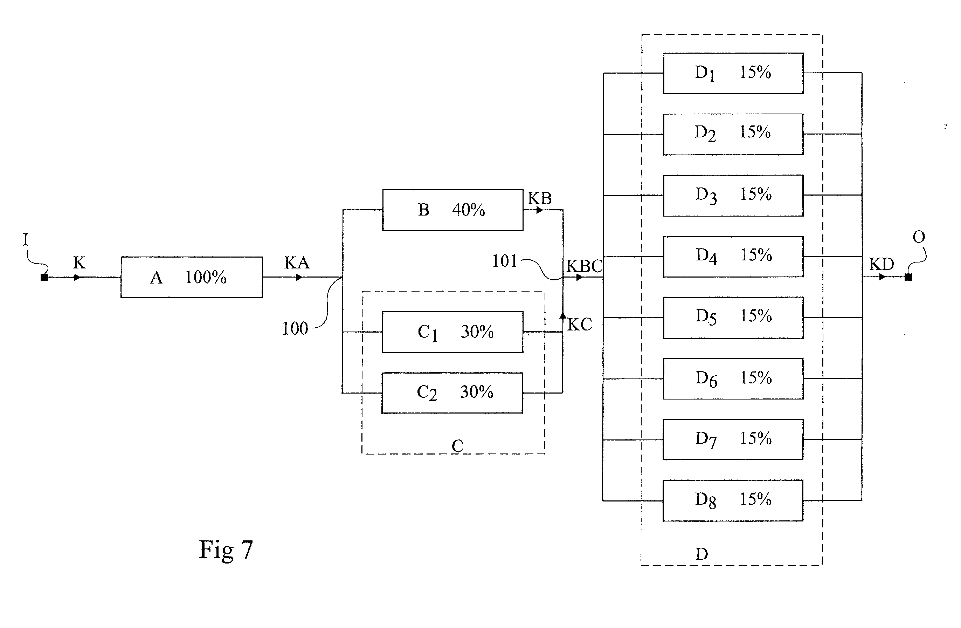

La figure 7 représente un dispositif électrique qui comprend plusieurs composants entre une entrée I et une sortie O, chaque composant étant capable de laisser passer une partie du courant K d'entrée quand il fonctionne, aucun courant ne circulant quand le composant est en panne.

Un composant A est placé entre l'entrée I et un premier point intermédiaire 100. Le courant KA en sortie du composant A est égal à 100% du courant K quand le composant fonctionne (et égal à 0% du courant K quand le composant est en panne).

Des composants B et C sont placés en parallèle entre le premier point intermédiaire 100 et un second point intermédiaire 101. Le courant de sortie KB du composant B est au maximum égal à 40% du courant K quand le composant B fonctionne.

Le composant C est constitué de deux composants $C_1$ et $C_2$ en parallèle. Chaque composant $C_1$ et $C_2$ peut laisser passer jusqu'à 30% du courant K. Le courant de sortie KC du composant C peut donc être égal à 0%, 30%, ou 60% du courant K, selon que les deux composants sont défaillants, qu'un seul composant est défaillant ou que les deux composants fonctionnent.

Un composant D est placé entre le point 101 et la sortie O. Le composant D est constitué de huit composants $D_1$ à $D_8$ en parallèle. Chaque composant $D_1$ à $D_8$ peut laisser passer jusqu'à 15% du courant K quand il fonctionne. De plus, il est nécessaire qu'au moins six des composants $D_1$ à $D_8$ fonctionnent pour que le composant D fonctionne.

Le courant KBC entrant dans le composant D est égal à la somme du courant KB et du courant KC. Le courant KBC peut être égal à 0%, 30% (seul $C_1$ ou $C_2$ fonctionne), 40% (seul B fonctionne), 60% ($C_1$ et $C_2$ fonctionnent), 70% ($C_1$ ou $C_2$ et B fonctionnent) ou 100% ($C_1$, $C_2$ et B fonctionnent) du courant K.

Le courant KD de sortie du composant D peut être égal à 0%, 30%, 40%, 60%, 70% (KBC est respectivement égal à 0%, 30%, 40%, 60%, 70% du courant K et au moins six des composants $D_1$ à $D_8$ fonctionnent), 90% (KBC est égal à 100% du courant K et 6 composants $D_1$ à $D_8$ fonctionnent) ou 100% ( KBC est égal à 100% du courant K et au moins 7 composants $D_1$ à $D_8$ fonctionnent) du courant K.

Chaque composant A, B, $C_1$, $C_2$ et $D_1$ à $D_8$ peut être considéré comme étant un paramètre du dispositif pouvant prendre la valeur 0 quand le composant est en panne et 1 quand le composant fonctionne. Les courants de sortie KA, KB, KC, KBC et KD sont aussi considérés comme étant des paramètres du dispositif pouvant prendre plus ou moins de valeurs. Ainsi KA et KB peuvent prendre la valeur 0 ou 1 selon que le courant vaut respectivement 0% ou 100% du courant K. KC peut prendre les valeurs 0, 1 ou 2 selon que le courant vaut respectivement 0%, 30% ou 60% du courant K. KBC peut prendre les valeurs 0, 1, 2, 3, 4 ou 5 selon que le courant vaut respectivement 0, 30, 40, 60, 70 ou 100% du courant K. KD peut prendre les valeurs 0 à 7 selon que le courant vaut respectivement 0, 30, 40, 60, 70, 90 ou 100% du courant K.

La probabilité $p(A,B,C_1,C_2,D_1,..,D_8,KA,KB,KC,KBC,KD)$ pour qu'une combinaison donnée de tous les paramètres soit pertinente est définie comme suit :

$$p(A,B,C_1,C_2,D_1,..,D_8,KA,KB,KC,KBC,KD)=$$

$$p(A)p(B)p(C_1)p(C_2)p(D_1)p(D_2)p(D_3)p(D_4)p(D_5)p(D_6)p(D_7)p(D_8)$$

$$p(KA)p(KB)p(KC)p(KBC)p(KD)p(KA/A)p(KB/B,KA)p(KC/C,KA)$$

$$p(KBC/KB,KC)p(KD/KBC,D) \tag{4}$$

où

$p(A)$, $p(B)$, $p(C_1)$, $p(C_2)$, $p(D_1)$ à $p(D_8)$, $p(KA)$, $p(KB)$, $p(KC)$, $p(KBC)$, et $p(KD)$ sont respectivement les probabilités pour que A, B, $C_1$, $C_2$, KA, KB, KC, KBC et KE aient une valeur donnée,
$p(KA/A)$ est la probabilité pour que KA ait une valeur donnée connaissant la valeur de A,
$p(KB/B,KA)$ est la probabilité pour que KB ait une valeur donnée connaissant la valeur de B et de KA,
$p(KC/C,KA)$ est la probabilité pour que KC ait une valeur donnée connaissant la valeur de C et de KA,
$p(KBC/KB,KC)$ est la probabilité pour que KBC ait une valeur donnée connaissant la valeur de KB et de KC,
$p(KD/KBC,D)$ est la probabilité pour que KD ait une valeur donnée connaissant la valeur de KBC et de D.
Les probabilités simples $p(A)$ à $p(KD)$ peuvent être définies à partir de bases de données relevant les cas de panne apparus lors de tests réalisés par l'entreprise fabricant le dispositif. Les probabilités conditionnelles $p(KA/A)$ à $p(KD/KBC,D)$ peuvent facilement être définies à partir de la description du dispositif. Par exemple:

$$p\,(KA=0\%/A=0) =1$$

$$p\,(KA=100\%/A=0) =0$$

$$p\,(KA=0\%/A=1) =0$$

$$p\,(KA=100\%/A=1) =1$$

Lors d'un diagnostic de panne du dispositif, on peut mesurer le courant en un point du dispositif (KA, KB, KC, KBC ou KD) et/ou regarder l'état de fonctionnement d'un ou de plusieurs des composants du dispositif (A, B, $C_1$, $C_2$, $D_1$ à $D_8$). Une fois un ou plusieurs courants relevés et/ou un ou plusieurs composants analysés, on peut déterminer quels sont le ou les composants susceptibles d'être en panne (diagnostic 1) ou déterminer quel est le courant susceptible de circuler en un point du dispositif (diagnostic 2).
Selon le diagnostic réalisé, les paramètres A, B, $C_1$, $C_2$, $D_1$ à $D_8$, KA, KB, KC, KBC et KC peuvent être soit des paramètres spécifiques dont on souhaite déterminer la valeur, soit des paramètres de mesure car une mesure du courant ou de l'état de fonctionnement est réalisée, soit des paramètres non retenus car on ne souhaite pas déterminer leur valeur et on ne fait aucune mesure de leur valeur.
Dans le diagnostic 1, les paramètres de mesure sont un ou plusieurs courants, par exemple KBC, et les paramètres spécifiques sont un ou plusieurs composants, dans cet exemple les composants A, B, $C_1$ et $C_2$ situés en amont du courant KBC. Après un relevé de la valeur du courant KBC, on construit selon le procédé de la présente invention, une représentation de la distribution de probabilité des combinaisons de valeurs des paramètres A, B, $C_1$ et $C_2$, connaissant la valeur du paramètre de mesure KBC. La probabilité $p(A,B,C_1,C_2/KBC)$ pour qu'une combinaison $(A,B,C_1,C_2)$ représente l'état du dispositif connaissant la valeur de KBC peut être calculée comme précédemment en faisant la somme de toutes probabilités $p(A,B,C_1,C_2,D_1,..,D_8, KA,KB,KC,KBC,KE)$ pour toutes les valeurs des paramètres non retenus dans cette inférence ($D_1$ à $D_8$, KA, KB, KC, KD). On cherchera dans un premier temps à identifier une première combinaison, celles présentant la probabilité maximale afin d'effectuer une première réparation. Si cette réparation s'avère insuffisante ou infondée, on identifiera une deuxième combinaison présentant la probabilité la plus élevée après la première combinaison et ainsi de suite.
Dans le diagnostic 2, le paramètre de commande sera le courant que l'on souhaite connaître, par exemple KBC, les paramètres de mesure peuvent être un ou plusieurs des autres paramètres. Après un relevé de la valeur des paramètres de mesure, on construira, selon le procédé de la présente invention, une représentation la distribution de probabilité des valeurs possibles du courant KBC. On sélectionne ensuite la valeur du courant KBC présentant la probabilité maximale.

## 3.2 Reconnaissance de chiffres

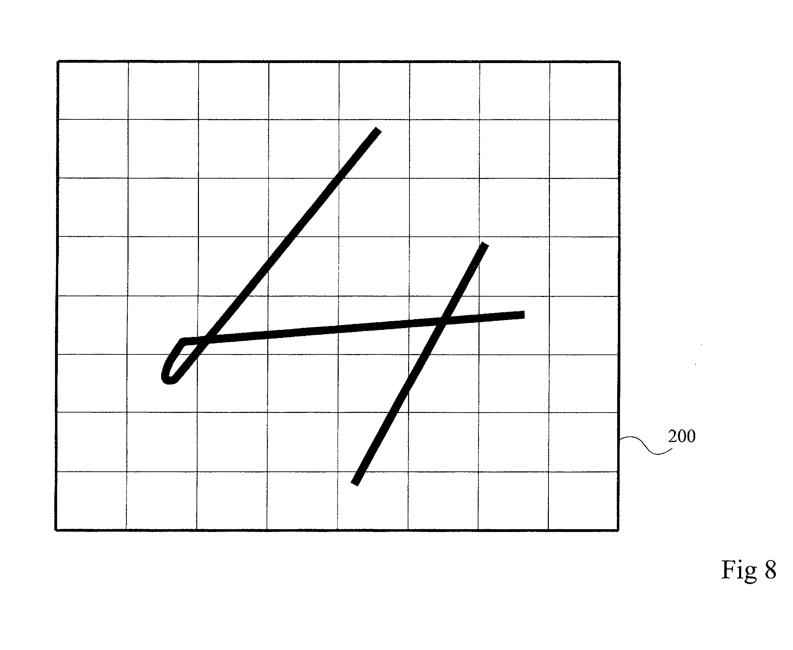

La figure 8 représente une image 200 d'un chiffre écrit à la main que l'on souhaite identifier. L'image est décomposée en 64 carrés ou pixels de tailles identiques. Pour chaque pixel, on mesure sur une échelle de 0 à 16, un niveau de gris représentant la surface occupée par les traits du chiffre dans le pixel considéré.

Le système comprend un seul paramètre à déterminer (ou paramètre spécifique) CHIFFRE pouvant prendre les valeurs 0 à 9 et 64 paramètres de mesure Pix[i], i étant un entier compris entre 1 et 64, pouvant prendre chacun les valeurs 0 à 15.

La probabilité p(CHIFFRE,Pix[1],...,Pix[64]) pour qu'une combinaison donnée de valeurs de tous les paramètres soit possible, est définie comme suit :

$$p(CHIFFRE, Pix\,[1]...., Pix\,[64]) =$$

$$p(CHIFFRE)*p(Pix[1]/CHIFFRE)*...* p(Pix[64]/CHIFFRE) \tag{5}$$

où p(CHIFFRE) est la probabilité d'avoir un chiffre donné, et p(Pix[i]/CHIFFRE) est la probabilité d'avoir un niveau de gris donné pour le pixel Pix[i] connaissant le chiffre.

On considère, de façon générale, que les chiffres 0 à 9 sont équiprobables et donc que p(CHIFFRE) est égale à 1/10. Les probabilités conditionnelles p(Pix[i]/CHIFFRE) sont définies à l'issue d'une phase d'apprentissage consistant à mesurer les niveaux de gris de chaque pixel pour différents modèles de chiffres manuscrits. Chaque probabilité p(Pix[i]/CHIFFRE) peut être définie par un histogramme (à 16 colonnes) normalisé selon la loi de Laplace.

La reconnaissance d'un chiffre comprend une première phase de mesure du niveau de gris de chaque pixel. Dans une deuxième phase, on construit à partir de la formule (5) et du procédé de la présente invention une représentation de la distribution de probabilité des chiffres connaissant les niveaux de gris de chaque pixel. Le choix d'un chiffre consiste à identifier le chiffre présentant la probabilité maximale.

## 3.3 Evaluation d'un coût de transport

Une société de transport maritime achemine par cargo des marchandises d'un port européen vers un autre port. Les marchandises transportées pouvant être très diverses : denrées alimentaires, médicaments, appareils électriques ou vêtements. Différentes sortes de containers sont utilisés pour le stockage des marchandises dans le cargo et dans le port d'arrivée. Les conteneurs peuvent être réfrigérants et plus ou moins grands.

La société de transport maritime souhaite établir rapidement, lors d'une conversation téléphonique par exemple, des devis de frais de transport sachant quels sont les ports de départ (PortDep) et d'arrivée (PortArr), le type de marchandise transportée (Mar), le conteneur utilisé (Cont), le client (Cl) et le mois (M) pendant lequel aura lieu le transport. Ces paramètres, renseignés préalablement à l'établissement du devis, constituent les paramètres de mesure du système de transport.

Par ailleurs, la société dispose de tout un ensemble d'informations concernant notamment le temps de préparation des conteneurs dans le port européen de départ (TdP), le temps de transport maritime (TdTM) (aller ou retour, les conteneurs sont pleins à l'aller et vides au retour), le temps d'attente du conteneur dans le port d'arrivée (TdA), le temps de déchargement du conteneur chez le client (TdDC), le temps de reconditionnement des conteneurs à leur retour en Europe (TdRE), les temps étant comptés en jours.

De même, on dispose d'informations concernant le coût journalier de la location d'un conteneur (CdLJ), le coût journalier d'immobilisation d'un conteneur pour son reconditionnement (CdIJ), le coût du transport maritime (CdTM), le coût de la réparation d'un conteneur (CdR).

Le coût total du transport (CT) est la somme du coût total de la location du conteneur (CdLT= CdLJ*(TdP + 2*TdTM + TdA + TdDC + TdRE)), du coût total d'immobilisation d'un conteneur (CdIT), du coût du transport maritime (CdTM=CdIT*TdRE), du coût d'équilibrage des charges dans le cargo (CdE), et du coût de la réparation d'un conteneur (CdR).

Le modèle de la distribution de probabilité conjointe de tous les paramètres précédemment définis est construit à partir des distributions de probabilité indépendantes définies pour chaque paramètre temporel (TdP, TdTM, TdA, TdDC et TdRE), et pour chaque paramètre de coût (CdLT, CdIT, CdTM, CdE, CdR, CT). Les valeurs de probabilité sont obtenues à partir d'un ensemble de données acquises au fur et à mesure de la vie de l'entreprise. Par exemple, les distributions de probabilité des temps de préparation des conteneurs dans le port de départ (TdP) connaissant la nature de la marchandise (Mar) sont une famille de gaussiennes. Les distributions de probabilité des coûts de transport maritime (CdTM) connaissant le type de conteneur (Cont), le port de départ (PortDep), le port d'arrivée (PortArr), et la marchandise transportée (Mar) sont des fonctions de Dirac.

De façon générale, on souhaite définir le coût total du transport (CT) sans détailler les coûts intermédiaires. Dans ce cas, il y a qu'un seul paramètre à déterminer (ou paramètre spécifique) : le coût total (CT). De façon à donner rapidement un coût total, on construit selon le procédé de la présente invention, une représentation de la distribution de probabilité des coûts totaux CT possibles connaissant les paramètres de mesure (PortDep, PortArr, Mar, Cont, CI et M). Le vendeur souhaite dans un premier temps connaître quel est le coût maximal, par exemple 2000 euros. Il fait alors un premier devis en prenant éventuellement une marge de 10% par rapport au coût maximal et propose alors 2200 euros. Dans le cas où le client n'accepte pas prix, le vendeur peut alors estimer quel est le coût moyen ou quelle est la plage de coûts contenant par exemple 90% des valeurs de coûts possibles. Le coût moyen peut être aisément calculer en divisant la constante de normalisation intermédiaire Zi par le nombre de coûts totaux possibles. Le vendeur fera alors un second devis en prenant une marge éventuellement plus faible par rapport au coût moyen ou par rapport à un des coûts de la plage de coûts.

Le devis établi peut aussi détailler l'ensemble des coûts, dans ce cas les paramètres de commande de mesure du système sont (CdLT, CdIT, CdTM, CdE, CdR). Le coût total est alors calculé à partir de la combinaison de coûts retenue.

Cet exemple d'application montre qu'à partir d'une représentation, on peut aisément déterminer la combinaison de probabilité maximale, calculer la valeur moyenne et l'écart type des valeurs d'un paramètre et sélectionner une des combinaisons présentant une probabilité donnée. Le procédé de la présente invention permet donc de mettre en oeuvre aisément plusieurs critères de sélection.

Bien entendu, la présente invention est susceptible de diverses variantes et modifications qui apparaîtront à l'homme de l'art. En particulier, l'homme de l'art saura définir le procédé de ramification d'une branche le plus adapté au système étudié. De même, l'homme de l'art saura définir de nouveaux critères de sélection d'une combinaison à partir de la représentation en forme d'arbre de la distribution de probabilité.

**Revendications**

1. Procédé de détermination de la valeur à donner à un ensemble de paramètres spécifiques d'un système à partir des valeurs d'un ensemble de paramètres de mesure de ce système, chacun des paramètres pouvant prendre un nombre fini de valeurs, le système étant associé à un moyen pour fournir une valeur de probabilité pour toute combinaison de valeurs des paramètres spécifiques, ladite valeur de probabilité étant d'autant plus élevée que le choix de la combinaison considérée est pertinent connaissant la valeur des paramètres de mesure, **caractérisé en ce qu'**il comprend les étapes suivantes :

   - relever la valeur de chaque paramètre de mesure ;
   - construire une représentation en forme d'arbre de la distribution de probabilité de toutes les combinaisons possibles de valeurs des paramètres spécifiques correspondant aux valeurs relevées,
   l'ensemble des combinaisons, constituant une première branche, étant divisé en plusieurs sous-ensembles de combinaisons, constituant des deuxièmes branches, chaque sous-ensemble regroupant des combinaisons ayant des valeurs de paramètres spécifiques proches, chaque deuxième branche pouvant se diviser en plusieurs troisièmes branches de façon similaire et ainsi de suite,
   une valeur de probabilité étant affectée à chaque branche, cette valeur de probabilité étant celle obtenue pour une des combinaisons de la branche considérée ou pour une des combinaisons d'une des branches dont est issue la branche considérée ;
   - choisir selon un critère de sélection prédéfini une des combinaisons de valeurs des paramètres spécifiques à partir de la représentation de la distribution de probabilité en forme d'arbre précédemment construite.

2. Procédé selon la revendication 1, dans lequel les branches issues de la division d'une même branche sont au nombre de deux et contiennent le même nombre de combinaisons, la première branche se divisant en deux deuxièmes branches, chaque deuxième branche pouvant se diviser en deux troisièmes branches et ainsi de suite.

3. Procédé selon la revendication 2, dans lequel la division d'une branche en deux branches comprend les étapes suivantes :

   a) choisir une combinaison différente des combinaisons ayant déjà servi à définir la valeur de probabilité des branches existantes et calculer la probabilité de cette combinaison choisie ;
   b) diviser la branche dite "mère" contenant la combinaison choisie en deux branches dites "filles" ; et

   dans le cas où la combinaison choisie et la combinaison "mère" ayant servi à définir la valeur de probabilité de la branche mère appartiennent à la même branche fille, attribuer aux deux branches filles la valeur de probabilité de la branche mère et diviser la branche fille contenant la combinaison choisie en reprenant le procédé à l'étape b), cette branche fille devenant la branche mère, et

dans le cas où la combinaison choisie et la combinaison mère n'appartiennent pas à la même branche fille, attribuer la valeur de probabilité de la combinaison choisie à la branche fille contenant la combinaison choisie et attribuer la valeur de probabilité de la combinaison mère à l'autre branche fille.

4. Procédé selon la revendication 1, dans lequel le critère de sélection consiste à choisir une des combinaisons présentant la probabilité maximale.

5. Procédé selon la revendication 2, dans lequel la sélection d'une combinaison consiste à mettre en oeuvre le procédé récursif comprenant les étapes suivantes :

a) choisir aléatoirement un nombre p compris entre 0 et 1 ;
b) calculer la somme des valeurs de probabilité affectées aux deux branches dites filles issues de la division de la première branche, et calculer pour chaque branche fille, une nouvelle valeur de probabilité égale au rapport entre la valeur de probabilité affectée à cette branche fille et la somme calculée ;
c) définir deux intervalles de probabilité contigus entre 0 et 1, le premier intervalle étant associé à une première branche fille, le second intervalle étant associé à la seconde branche fille, le premier intervalle allant de 0 à la valeur de probabilité de la première branche fille incluse et le second intervalle allant de cette valeur de probabilité à 1 ;
d) identifier dans quel intervalle se trouve le nombre p et sélectionner la branche fille associée à cet intervalle, et
dans le cas où la branche fille sélectionnée se ramifie en d'autres branches, reprendre le procédé récursif à l'étape a) la première branche étant remplacée par la branche fille sélectionnée, sinon
e) choisir une des combinaisons de la branche fille sélectionnée.

6. Procédé selon la revendication 1, dans lequel le critère de sélection consiste à choisir une des combinaisons ayant une valeur de probabilité prédéterminée ou comprise entre deux valeurs de probabilité données.

7. Procédé selon la revendication 1, dans lequel les valeurs de probabilité affectées à chaque branche ne sont pas normalisées et peuvent être supérieures à un.

8. Procédé selon la revendication 7, dans lequel une pondération est affectée à chaque branche, la pondération des branches des dernières ramifications étant égale au produit de la valeur de probabilité affectée à cette branche et du nombre de combinaisons de cette branche, la pondération des autres branches étant égale à la somme des pondérations des branches issues de la branche considérée et se trouvant sur le niveau de ramification suivant.

9. Procédé selon la revendication 8, dans lequel la valeur de probabilité affectée à chaque branche peut être normalisée, la valeur de probabilité normalisée d'une branche étant obtenue en divisant la valeur de probabilité de cette branche par la pondération affectée à la première branche de l'arbre.

10. Procédé selon la revendication 3, dans lequel le choix d'une combinaison est effectué en mettant en oeuvre un procédé produisant des combinaisons ayant des valeurs de probabilité élevées.

11. Procédé selon la revendication 1, dans lequel la représentation de la distribution de probabilité de toutes les combinaisons est mémorisée et peut être affinée ultérieurement par la création de branches supplémentaires, ou peut être simplifiée par la suppression de certaines branches.

12. Procédé selon la revendication 1, dans lequel le nombre de valeurs pouvant être prises par un paramètre est artificiellement augmenté, la valeur de probabilité d'une combinaison de valeurs de paramètres de commande dont au moins une valeur d'un des paramètres correspond à une valeur ajoutée est nulle.

Cy

$P_m(t_1)$

$P_e(t_1)$   $\overrightarrow{Cx}$   4

Fig 1

Fig 2A

$\alpha_v$

Fig 2B

$\alpha_h$

$\alpha_{rot}$

$d_1$

$P_m(t_1)$

$d_2$

$P_e(t_2)c$

$P_e(t_2)b$

$P_e(t_2)a$

Fig 3

Fig 4A

Fig 4D

Fig 4B

Fig 4E

Fig 4C

Fig 4F

Fig 4G

Fig 5

EP 1 387 232 A1

Fig 6A

Fig 6C

Fig 6B

Fig 6D

Fig 7

Fig 8

200

**Office européen des brevets**

## RAPPORT DE RECHERCHE EUROPEENNE

Numéro de la demande

EP 02 35 4115

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 4 872 122 A (ALTSCHULER MARTIN D ET AL) 3 octobre 1989 (1989-10-03) * colonne 2, ligne 22 - colonne 7, ligne 57 * --- | 1 | G05B23/02 G05B17/02 G05B13/02 |
| A | US 5 857 169 A (SEIDE FRANK) 5 janvier 1999 (1999-01-05) * colonne 7, ligne 46 - colonne 13, ligne 8 * --- | 1 | |
| A | US 5 999 902 A (SCAHILL FRANCIS JAMES ET AL) 7 décembre 1999 (1999-12-07) * colonne 3, ligne 60 - colonne 5, ligne 29 * --- | 1 | |
| A | US 5 966 523 A (UCHINO TAKU) 12 octobre 1999 (1999-10-12) * figures 2-5 * --- | 1 | |
| A | US 6 408 290 B1 (THIESSON BO ET AL) 18 juin 2002 (2002-06-18) ----- | | |

DOMAINES TECHNIQUES RECHERCHES (Int.Cl.7)

G05B

Le présent rapport a été établi pour toutes les revendications

| Lieu de la recherche | Date d'achèvement de la recherche | Examinateur |
|---|---|---|
| LA HAYE | 20 janvier 2003 | Kelperis, K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 02 35 4115

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-01-2003

| Document brevet cité au rapport de recherche | | Date de publication | Membre(s) de la famille de brevet(s) | | Date de publication |
|---|---|---|---|---|---|
| US 4872122 | A | 03-10-1989 | US | 5005143 A | 02-04-1991 |
| US 5857169 | A | 05-01-1999 | DE | 69613338 D1 | 19-07-2001 |
| | | | DE | 69613338 T2 | 29-05-2002 |
| | | | EP | 0788649 A2 | 13-08-1997 |
| | | | WO | 9708686 A2 | 06-03-1997 |
| | | | JP | 10508392 T | 18-08-1998 |
| US 5999902 | A | 07-12-1999 | AU | 702903 B2 | 11-03-1999 |
| | | | AU | 4887696 A | 23-09-1996 |
| | | | CA | 2211636 A1 | 12-09-1996 |
| | | | DE | 69615667 D1 | 08-11-2001 |
| | | | DE | 69615667 T2 | 20-06-2002 |
| | | | EP | 0813735 A1 | 29-12-1997 |
| | | | ES | 2164870 T3 | 01-03-2002 |
| | | | WO | 9627872 A1 | 12-09-1996 |
| | | | JP | 11501410 T | 02-02-1999 |
| | | | NO | 974097 A | 08-09-1997 |
| | | | NZ | 302748 A | 29-04-1999 |
| US 5966523 | A | 12-10-1999 | JP | 9190464 A | 22-07-1997 |
| US 6408290 | B1 | 18-06-2002 | WO | 9928832 A2 | 10-06-1999 |
| | | | US | 6345265 B1 | 05-02-2002 |
| | | | US | 6336108 B1 | 01-01-2002 |
| | | | US | 6496816 B1 | 17-12-2002 |

EPO FORM P0460